# EUROPEAN PATENT APPLICATION

(11) **EP 4 819 749 A1**
(43) Date of publication of application: **07.10.2026**
(21) Application number: 24897355.4
(22) Date of filing: 18.11.2024
(51) Int. Cl.: H04W 74/0816, H04W 72/0446, H04W 74/02, H04W 74/0808, H04W 84/12, H04W 92/20

(54) **COMMUNICATION DEVICE, CONTROL METHOD, AND PROGRAM**

(30) Priority: 28.11.2023 JP 2023201135
(71) Applicant: Canon Kabushiki Kaisha, Tokyo 146-8501 (JP)
(72) Inventor: YOSHIKAWA YUKI, Tokyo 146-8501 (JP)
(74) Representative: Canon Europe Limited
(86) International application number: PCT/JP2024/040776
(87) International publication number: WO 2025/115668

(57) **Abstract**

A communication apparatus acquires a Transmission Opportunity (TXOP) for transmitting a wireless frame. The communication apparatus secures a first TXOP duration by using a first wireless frame. The communication apparatus allocates a second TXOP duration within the first TXOP duration to another communication apparatus by using a Trigger frame. The communication apparatus receives, during the second TXOP duration, a predetermined control frame indicating termination of the second TXOP duration. In a case where the predetermined control frame is received during the second TXOP duration, the communication apparatus performs control to transmit a second wireless frame after a duration of a predetermined Inter Frame Space (IFS) elapses from a reception of the predetermined control frame. The communication apparatus performs control to transmit the second wireless frame based on a predetermined condition.

## Description

### Technical Field

The present invention relates to a communication apparatus that performs wireless communication, a control method for the communication apparatus, and a program.

### Background Art

In recent years, with an increase in the amount of data to be communicated, development of communication technologies such as wireless LAN (Local Area Network) has been promoted. As a main communication standard for wireless LAN, an IEEE (Institute of Electrical and Electronics Engineers) 802.11 standard series is known. The IEEE 802.11 standard series includes standards such as IEEE 802.11a/b/g/n/ac/ax. Standardization of the IEEE 802.11be standard, which is a successor standard to IEEE 802.11ax, is currently in progress.

As a channel access scheme of the IEEE 802.11 standards, Carrier Sense Multiple Access with Collision Avoidance (CSMA/CA) is known. In the CSMA/CA scheme, a communication apparatus that is to start communication always checks, before starting communication, whether other surrounding communication apparatuses are transmitting radio waves, and starts communication after confirming that no other surrounding communication apparatuses are transmitting radio waves (the channel is idle). For example, in a case where another surrounding communication apparatus is transmitting radio waves (the channel is busy), the communication apparatus waits for a certain predetermined period (IFS: Inter Frame Space), and, after the predetermined period, checks again whether any other surrounding communication apparatus is transmitting radio waves. As a result of the checking, in a case where the channel is idle, the communication apparatus waits for a random waiting time. In a case where the channel is still idle even after the random waiting time has elapsed, the communication apparatus is deemed to have acquired a transmission opportunity (TXOP: Transmission Opportunity), and starts communication. The communication apparatus, which has acquired the transmission opportunity, declares the time of the transmission opportunity (TXOP duration) in a frame to be transmitted first, thereby causing other surrounding communication apparatuses to set Network Allocation Vectors (NAVs) for the TXOP duration. Due to the setting of the NAVs, the other surrounding communication apparatuses are controlled to refrain from performing the above-described channel access procedure during the period for which the NAVs are set, regardless of whether the channel is idle.

As a wireless frame for resetting the NAVs that have been set, a Contention Free-End (CF-End) frame is known. The CF-End frame is a wireless frame used by the communication apparatus that has secured the TXOP to notify other surrounding communication apparatuses of termination of the TXOP duration. A communication apparatus that has received the CF-End frame resets the NAV set therein, thereby resuming the above-described channel access procedure.

### Citation List

### Patent Literature

PTL 1: Japanese Patent Laid-Open No. 2021-103805

### Summary of Invention

### Technical Problem

In IEEE 802.11be described above, a mechanism referred to as TXOP sharing is under consideration. This mechanism allocates a portion of a TXOP acquired by an AP (Access Point) to an STA (Station), thereby sharing the TXOP secured by the AP with the STA. A mechanism in which the AP transmits a Trigger frame to the STA to allocate a portion of the TXOP acquired by the AP to the STA is referred to as Triggered TXOP sharing. Thus, sharing the TXOP acquired by the AP with the STA designated by the AP allows only the AP and the designated STA to perform communication during the shared TXOP duration. That is, an undesignated STA refrains from communication during the shared TXOP duration, thereby making it possible to avoid communication collisions and channel use due to unnecessary transmission frames and improve communication efficiency.

Furthermore, in TXOP sharing, it is under consideration that in a case where the STA with which the TXOP is shared terminates communication prior to the expiration of the shared TXOP duration, the STA transmits a CF-End frame to provide notification of the termination of the use of the TXOP duration. This allows the STA to return the remaining TXOP duration to the AP, enabling the AP to start communication during the remaining TXOP duration as needed.

However, other surrounding communication apparatuses that have received the CF-End frame may reset the NAVs set therein and start communication, despite the remaining TXOP duration being secured by the AP. Accordingly, in a case where a communication apparatus that has reset the NAV starts communication after waiting for a waiting time equivalent to that of the AP securing the TXOP duration, a communication collision may occur between the communication apparatus and the AP securing the TXOP duration.

In light of the above-described problem, one object of the present invention is to reduce communication collisions between a communication apparatus that has acquired a TXOP and shared the TXOP with another communication apparatus, and other surrounding communication apparatuses.

### Solution to Problem

To achieve the above-described object, a communication apparatus according to an aspect of the present invention includes: acquisition means for acquiring a Transmission Opportunity (TXOP) for transmitting a wireless frame; securing means for securing a first TXOP duration by using a first wireless frame;
sharing means for allocating a second TXOP duration within the first TXOP duration to another communication apparatus by using a Trigger frame; reception means for receiving, during the second TXOP duration, a predetermined control frame indicating termination of the second TXOP duration; and control means for, in a case where the predetermined control frame is received during the second TXOP duration, performing control to transmit a second wireless frame after a duration of a predetermined Inter Frame Space (IFS) elapses from a reception of the predetermined control frame, wherein the control means performs control to transmit the second wireless frame based on a predetermined condition.

### Advantageous Effects of Invention

According to one aspect of the present invention, it is possible to reduce communication collisions between a communication apparatus that has acquired a TXOP and shared the TXOP with another communication apparatus, and other surrounding communication apparatuses.

### Brief Description of Drawings

[Fig. 1] Fig. 1 is a diagram illustrating an example of a network configuration.
[Fig. 2] Fig. 2 is a diagram illustrating an example of a hardware configuration of an AP and an STA.
[Fig. 3] Fig. 3 is a diagram illustrating an example of a block diagram of a functional configuration of an AP and an STA.
[Fig. 4] Fig. 4 is a diagram illustrating an example of a sequence diagram of a mechanism for acquiring a TXOP.
[Fig. 5] Fig. 5 is a diagram illustrating an example of a sequence diagram of a TXOP sharing mechanism.
[Fig. 6] Fig. 6 is a diagram illustrating an example of a sequence diagram when TXOP sharing according to the present embodiment is performed.
[Fig. 7] Fig. 7 is a diagram illustrating an example of a flowchart of a process performed by a Coordinator AP that has acquired a transmission opportunity.

### Description of Embodiments

An embodiment will be described in detail hereinafter with reference to the accompanying drawings. The following embodiment is not intended to limit the claimed invention. Although the embodiment describes multiple features, not all of these multiple features are necessarily essential to the invention, and the multiple features may be combined in any desired manner. Furthermore, in the accompanying drawings, the same or similar components are denoted by the same reference numerals, and redundant descriptions thereof are omitted.

### (Network Configuration)

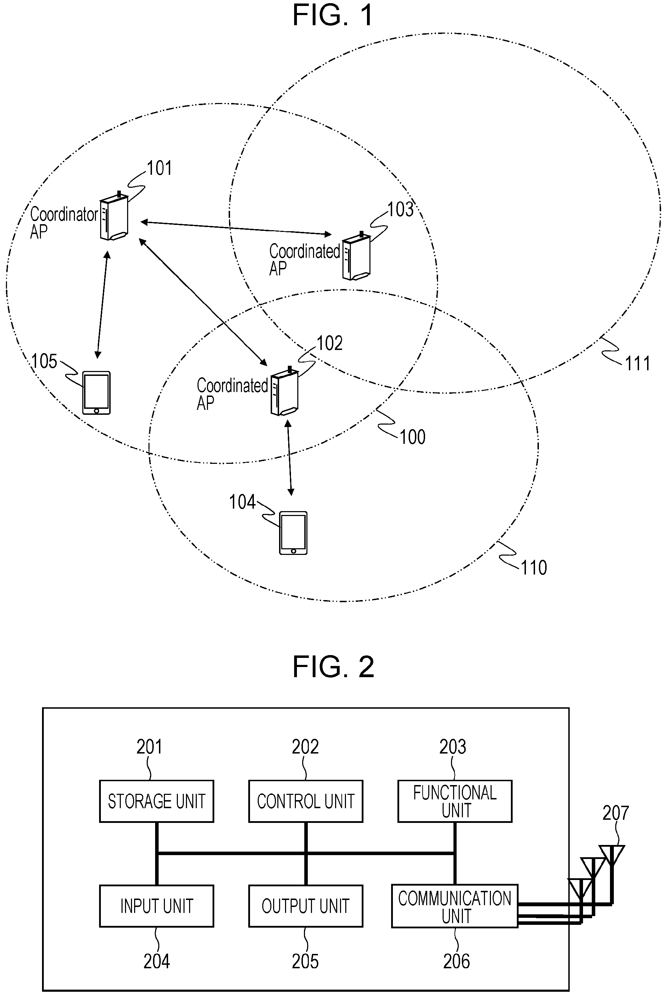

Fig. 1 illustrates an example of a network configuration according to the present embodiment. The network according to the present embodiment includes networks (100, 110, and 111) configured by three access point (hereinafter, AP) apparatuses (an AP 101, an AP 102, and an AP 103). A station (hereinafter, STA) apparatus (an STA 105) participates in the network 100, and an STA 104 participates in the network 110. In the following, the APs 101 to 103 and the STAs 104 and 105 are collectively referred to as communication apparatuses.

Each communication apparatus is configured to be capable of executing communication of wireless frames compliant with the IEEE 802.11bn standard, which is a successor standard to the IEEE 802.11be standard and targets a maximum transmission rate from 90 Gbps to more than 100 Gbps. The STAs 104 and 105 are also configured to be capable of executing communication of wireless frames compliant with IEEE 802.11bn. IEEE is an abbreviation for Institute of Electrical and Electronics Engineers. IEEE 802.11bn includes, as main features, support for highly reliable communication and low-latency communication, and AP coordination. A wireless frame communicated in the successor standard is also referred to as a UHR (Ultra High Reliability) PPDU. PPDU is an abbreviation for physical layer (PHY) protocol data unit.

The name "UHR" is used for convenience in view of goals to be achieved in the successor standard and featured functions of the standard, and may be replaced with another name upon completion of the standardization. The name "IEEE 802.11bn" may also be replaced with another name upon completion of the standardization. However, it should be noted that the present specification and the appended claims are substantially applicable to any successor standard to the 802.11be standard. Each communication apparatus can communicate at frequencies in a 2.4 GHz band, a 3.6 GHz band, a 5 GHz band, a 6 GHz band, and so-called millimeter wave bands, namely, a 45 GHz band and a 60 GHz band. The frequency bands used by each communication apparatus are not limited to those described above. For example, other frequency bands such as a Sub-1 GHz band may be used. Each communication apparatus can communicate using bandwidths of 20 MHz, 40 MHz, 80 MHz, 160 MHz, 320 MHz, 540 MHz, 640 MHz, 1080 MHz, and 2160 MHz. The bandwidths used by each communication apparatus are not limited to those described above. For example, other bandwidths such as 240 MHz and 4 MHz may be used.

Although Fig. 1 illustrates a wireless network including three APs and two STAs as an example, the numbers of apparatuses may be greater or smaller than those illustrated. Any network configuration including at least two APs may be employed.

The APs 101 to 103 are APs that perform coordinated operation, and the AP 101 is an AP that performs overall control for coordination. In the present embodiment, an AP that performs overall control, such as the AP 101, is also referred to as a Coordinator AP. The APs 102 and 103 are APs that function as controlled apparatuses controlled by the Coordinator AP. In the present embodiment, APs controlled by the Coordinator AP, such as the APs 102 and 103, are also referred to as Coordinated APs.

The APs 101 to 103 can perform coordinated operation. Specifically, the AP 101 can allocate a portion or the whole of the duration of a transmission opportunity (TXOP: transmission opportunity) (TXOP duration) for wireless frames in a communication channel secured by the AP 101 to the AP 102. The AP 102, which is allocated the TXOP duration, can transmit a wireless frame to an STA participating in the wireless network of the AP 102 or to a surrounding AP for the duration. In the present embodiment, a backhaul line for transmitting and receiving data and control signals among the APs to perform the above-described coordinated operation of the APs is a communication path that uses a wireless medium.

The APs 101 to 103 can perform MU (Multi User) communication for simultaneous communication with a plurality of STAs using an OFDMA technique. In MU communication using an OFDMA technique, one channel is divided into a plurality of subchannels referred to as RUs (Resource Units). Each of the divided RUs is handled as a resource for communication with a different STA (or a STA group including a plurality of STAs), thereby allowing the AP and the plurality of STAs to communicate simultaneously in the one channel. In this case, an MU (Multi User) PPDU obtained by modulating data using OFDMA is transmitted from the AP to one or more STAs. In a case where all the devices support the IEEE 802.11bn standard, a UHR MU PPDU, which is an MU PPDU compliant with the IEEE 802.11bn standard, is assumed to be transmitted to the one or more STAs.

Each communication apparatus may be an MLD (Multi-Link Device) capable of establishing a plurality of parallel links with another communication apparatus via a plurality of different frequency channels. Each communication apparatus as an MLD can perform multi-link communication with another communication apparatus by establishing the plurality of links with the other communication apparatus in parallel.

Although each communication apparatus has been described as supporting the IEEE 802.11bn standard, each communication apparatus may additionally support legacy standards that are standards prior to the IEEE 802.11bn standard. Specifically, the AP 101 and the STA 102 may support at least one of the IEEE 802.11a/b/g/n/ac/ax/be standards. In addition to the IEEE 802.11 series standards, other communication standards such as Bluetooth (registered trademark), NFC, BLE (registered trademark), UWB, ZigBee, and MBOA may be supported. UWB is an abbreviation for Ultra Wide Band, and MBOA is an abbreviation for Multi Band OFDM Alliance. NFC is an abbreviation for Near Field Communication, and BLE is an abbreviation for Bluetooth Low Energy. UWB includes Wireless USB, Wireless 1394, WiNET, and the like. Communication standards for wired communication, such as wired LAN, may also be supported. Specific examples of the APs 101 to 103 include, but are not limited to, wireless LAN routers and personal computers (PCs). The APs 101 to 103 may be information processing apparatuses such as wireless chips capable of executing wireless communication compliant with the IEEE 802.11bn standard. Specific examples of the STAs 104 and 105 include, but are not limited to, cameras, tablets, smartphones, PCs, mobile phones, video cameras, and headsets. The STAs 104 and 105 may be information processing apparatuses such as wireless chips capable of executing wireless communication compliant with the IEEE 802.11bn standard.

In the present embodiment, all BSSIDs corresponding to the respective wireless networks provided by the APs 101 to 104 are different from each other. BSSID is an abbreviation for Basic Service Set Identifier, and is an identifier for identifying an access point. On the other hand, SSIDs indicated by the APs 101 to 103 in the respective wireless networks are all common. SSID is an abbreviation for Service Set Identifier, and is an identifier for identifying a wireless network.

### (Hardware Configuration of Communication Apparatus)

Fig. 2 illustrates an example of a hardware configuration of each communication apparatus (APs and STAs). As an example of the hardware configuration, the communication apparatus includes a storage unit 201, a control unit 202, a functional unit 203, an input unit 204, an output unit 205, a communication unit 206, and an antenna 207.

The storage unit 201 includes one or both of a ROM and a RAM, and stores a program for performing various operations described below and various information such as communication parameters for wireless communication. RAM is an abbreviation for Random Access Memory, and ROM is an abbreviation for Read Only Memory. As the storage unit 201, a storage medium including a non-volatile storage device such as a hard disk or an SSD (Solid State Drive) may be used in addition to a memory such as a ROM or a RAM.

The control unit 202 includes, for example, a processor such as a CPU or an MPU, an ASIC (Application Specific Integrated Circuit), a DSP (Digital Signal Processor), an FPGA (Field Programmable Gate Array), or the like. CPU is an abbreviation for Central Processing Unit, and MPU is an abbreviation for Micro Processing Unit. The control unit 202 executes a program stored in the storage unit 201 and operates a hardware circuit such as an ASIC to control the entire apparatus. The control unit 202 may control the entire apparatus through cooperation between the programs stored in the storage unit 201 and an OS (Operating System).

Further, the control unit 202 controls the functional unit 203 to execute predetermined processing such as imaging, printing, or projection. The functional unit 203 is hardware for the apparatus to execute predetermined processing. For example, in a case where the communication apparatus is a camera such as a digital still camera or a smartphone having a camera, the functional unit 203 is an imaging unit to perform imaging processing on an image of the surroundings via a camera unit (not illustrated) included in the communication apparatus. For example, in a case where the communication apparatus is a printer, the functional unit 203 is a printing unit to perform printing processing on a sheet such as paper based on print data obtained from the outside via wireless communication. For example, in a case where the communication apparatus is a projector or smart glasses, the functional unit 203 is a projection unit to perform projection processing on image data or video data obtained from the outside via wireless communication. In the case of smart glasses, the projection surface is, for example, the retina of an end user. Data processed by the functional unit 203 may be data stored in the storage unit 201, or may be data communicated with another AP or STA via the communication unit 206 described below. Furthermore, a communication apparatus such as the AP 101 can also provide a network storage function such as NAS (Network Attached Storage). This function is provided to another communication apparatus as a Web service such as a network storage service. For example, a communication apparatus such as an STA connects to a network storage service provided by the APs 101 to 103 or the like by using a protocol such as SMB, FTP, or WebDAV. The communication apparatus such as an STA uploads a file to the storage service or downloads a file from the storage. The data communication for the upload or the download is also implemented through communication of UHR PPDUs between the apparatuses.

The input unit 204 receives various operations from a user. The output unit 205 provides various outputs to the user. The output by the output unit 205 includes, for example, at least one of display on a screen, audio output by a speaker, and vibration output. Both the input unit 204 and the output unit 205 may be implemented by one module such as a touch panel.

The communication unit 206 controls wireless communication compliant with the IEEE 802.11 standard series and controls IP communication. In the present embodiment, the communication unit 206 can, in cooperation with the antenna 207, execute communication control for transmitting and receiving a UHR PPDU, which is a wireless frame of a UHR standard, and a PPDU compliant with a standard prior thereto. The antenna 207 is an antenna capable of transmitting and receiving a signal in at least one of frequency bands including, for example, a sub-GHz band, a 2.4 GHz band, a 5 GHz band, a 6 GHz band, and a millimeter-wave band. In the present embodiment, the communication apparatus includes three antennas. The communication apparatus may include a single antenna or may include a plurality of different antennas for respective frequency bands. In a case where a plurality of antennas are included, a communication unit 206 corresponding to each antenna may be included.

In a case where the communication apparatus supports the above-described NFC standard, Bluetooth standard, wired communication standards, or the like, the communication unit 206 is configured to control wireless communication or wired communication compliant with these communication standards.

### (Functional Configuration of Communication Apparatus)

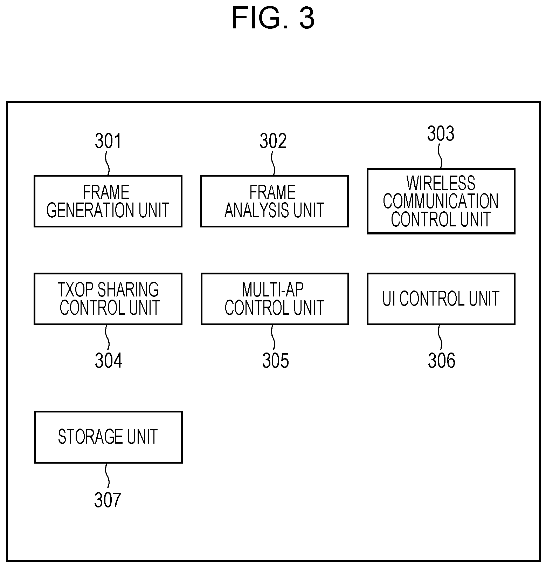

Fig. 3 illustrates an example of a block diagram of a functional configuration of a communication apparatus (AP and STA). In the present embodiment, each functional block is stored as a program in the storage unit 201, and the control unit 202 executes the program, thereby implementing the function thereof. The control unit 202 executes the program, thereby controlling each hardware component and performing calculation and processing of information to implement each function. Some or all of the functional blocks may be implemented by hardware. In this case, some or all of the functional blocks are implemented by, for example, ACICs (Application Specific Integrated Circuits).

In the present embodiment, the communication apparatus includes a frame generation unit 301, a frame analysis unit 302, a wireless communication control unit 303, a TXOP sharing control unit 304, a Multi-AP control unit 305, a UI control unit 306, and a storage unit 307.

The frame generation unit 301 is a functional unit that performs processing to generate a wireless frame to be transmitted by the wireless communication control unit 303.

The frame analysis unit 302 is a functional unit that performs analysis processing of a wireless frame received by the wireless communication control unit 303.

The wireless communication control unit 303 broadcasts a frame generated by the frame generation unit 301 to surrounding terminals, or transmits the frame to a counterpart communication apparatus by unicast. Alternatively, the wireless communication control unit 303 sends, to the frame analysis unit 302, a wireless frame received from the surroundings or from a communication counterpart.

The TXOP sharing control unit 304 performs control to allocate an obtained duration of a transmission opportunity (TXOP) secured by the communication apparatus to another AP. Alternatively, the TXOP sharing control unit 304 instructs the frame generation unit 301 to generate a wireless frame to be transmitted next within the duration secured by the communication apparatus. Further, the TXOP sharing control unit 304 determines the implementation status of TXOP sharing, based on a result interpreted by the frame analysis unit 302.

The Multi-AP control unit 305 performs control for operating in coordination with another AP. The Multi-AP control unit 305 determines, based on the content interpreted by the frame analysis unit 302, an AP currently participating in a Multi-AP group, and instructs the frame generation unit 301 to generate a wireless frame to be transmitted for coordination with another AP.

The UI control unit 306 includes hardware related to a user interface (UI) such as a touch panel or buttons for receiving an operation on the communication apparatus by a user (not illustrated), and a program for controlling the hardware. The UI control unit 306 also has a function for presenting information to the user, such as display of an image or the like, or audio output. For example, the UI control unit 306 can display a setting screen related to Multi-AP of the communication apparatus 101, and can receive a user operation on the display. In this case, the UI control unit 306 of the communication apparatus 101 displays a setting screen for selecting some other APs capable of forming Multi-AP in cooperation with the communication apparatus 101. The UI control unit 306 may cause the user to select, via the setting screen, which of the other APs to cooperate with to form Multi-AP.

The storage unit 307 is a storage device that can include a ROM, a RAM, or the like for storing programs and data for the communication apparatus 101 to operate.

### (Acquisition of TXOP)

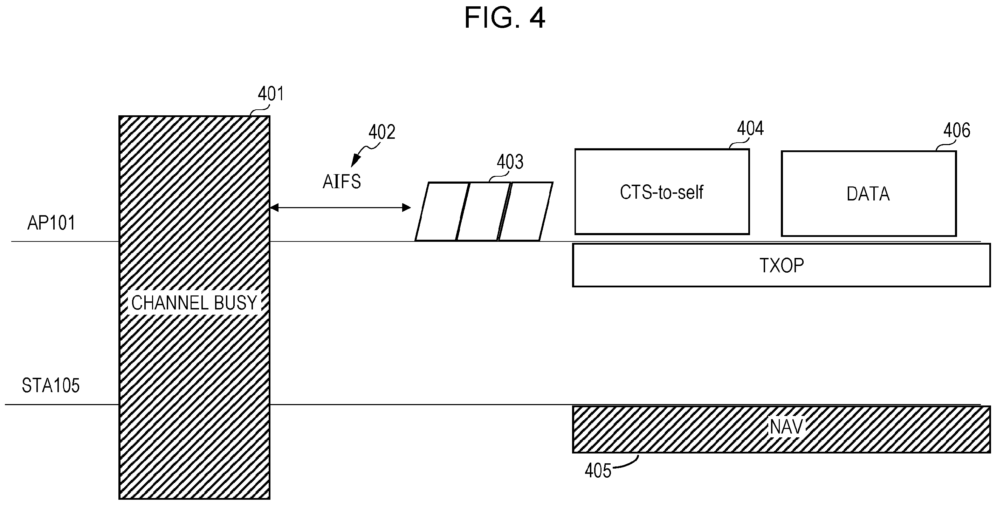

Next, an example of a sequence diagram of a mechanism in which each communication apparatus according to the present embodiment acquires a TXOP will be described. Fig. 4 is a diagram illustrating an example of a mechanism in which the communication apparatus 101 acquires a TXOP by using the Carrier Sense Multiple Access with Collision Avoidance (CSMA/CA) scheme. In the present embodiment, the communication apparatus 101 and the communication apparatus 105 are assumed to perform channel access based on Enhanced Distributed Channel Access (EDCA). EDCA is a mechanism for performing CSMA/CA while taking into account data priority by varying parameters for setting an IFS, a waiting time, and the like described below in accordance with a data type (AC: Access Category). IFS is an abbreviation for Inter Frame Space. Parameters related to the EDCA (EDCA parameters) are assumed to be broadcast by an AP periodically (e.g., at intervals of 100 Time Units) using a Beacon frame.

Reference numeral 401 represents a state in which the communication channel of the network 100 is busy (a state in which any other surrounding terminal is emitting radio waves). For example, it is assumed that the communication apparatus 103 is performing communication during the period indicated by reference numeral 401. Checking whether the channel is busy or idle in this manner is referred to as carrier sense.

Subsequently, when the channel changes from busy to idle, the communication apparatus 101 checks whether the channel is idle for the duration of an AIFS (402). AIFS is a type of IFS and is an abbreviation for Arbitration IFS. The AIFS is determined based on an AIFSN of the EDCA parameters. In a case where the channel changes to busy within the duration of the AIFS in 402, the communication apparatus 101 checks again whether the channel is idle for the duration of the AIFS after the channel changes to idle.

After confirming in 402 that the channel is idle for the duration of the AIFS, the communication apparatus 101 waits for a backoff period (403). The backoff period is managed by a backoff timer held by each communication apparatus. The backoff period for each data item is also determined based on the EDCA parameters, and a random value is set within a range of parameter values from 0 to the Contention Window (CW). After the AIFS waiting time in 402 ends, the backoff timer starts decrementing. For example, in a case where the channel becomes busy while the communication apparatus 101 is waiting for the backoff period because another communication apparatus starts communication, the backoff timer suspends decrementing. Then, when the channel becomes idle again, the backoff timer resumes decrementing after the AIFS waiting time has elapsed. That is, even if the channel becomes busy within the backoff period, the backoff timer is not reset but resumes decrementing from the suspended value.

When the backoff timer becomes 0, the communication apparatus 101 acquires a TXOP (transmission opportunity) and starts transmission of a wireless frame (404). In the present embodiment, the communication apparatus 101 transmits a CTS-to-self frame as a wireless frame to be transmitted after the backoff, but the wireless frame is not limited thereto. The wireless frame is only required to be a wireless frame including at least a MAC header. CTS is an abbreviation for Clear to Send, and MAC is an abbreviation for Medium Access Contorol. The CTS-to-self frame is a CTS frame transmitted by the communication apparatus 101 and addressed to the communication apparatus 101 itself. The CTS frame is a frame for notifying another communication apparatus to refrain from communication for a TXOP duration. Thus, another communication apparatus that has received the CTS frame sets a NAV therein, thereby performing control to refrain from transmission for the duration of the NAV.

In a wireless frame transmitted in 403, the communication apparatus 101 notifies surrounding communication apparatuses of a TXOP duration to be secured by the communication apparatus 101. Specifically, the communication apparatus 101 transmits a CTS-to-self frame in 404, with the Duration field of this frame storing the TXOP, thereby notifying other surrounding communication apparatuses of the TXOP duration acquired by the communication apparatus 101.

Upon receiving a wireless frame including a value other than 0 in the Duration field, the communication apparatus 105 sets a NAV (405) based on the value included in the Duration field. The communication apparatus 105 regards the channel as being busy for the duration of the NAV, and refrains from performing a channel access procedure for wireless frame transmission.

After transmitting the CTS-to-self frame, the communication apparatus 101 transmits data to another communication apparatus within the TXOP acquired by the communication apparatus 101 (406).

As described above, in the present embodiment, a communication apparatus having a wireless frame to be transmitted waits for transmission for the duration of a predetermined IFS after the channel has become idle, and further waits for transmission for a backoff period. In this manner, a communication apparatus having the shortest waiting time including the duration of the predetermined IFS and the backoff period acquires a transmission opportunity (TXOP) and transmits a wireless frame.

### (TXOP Sharing)

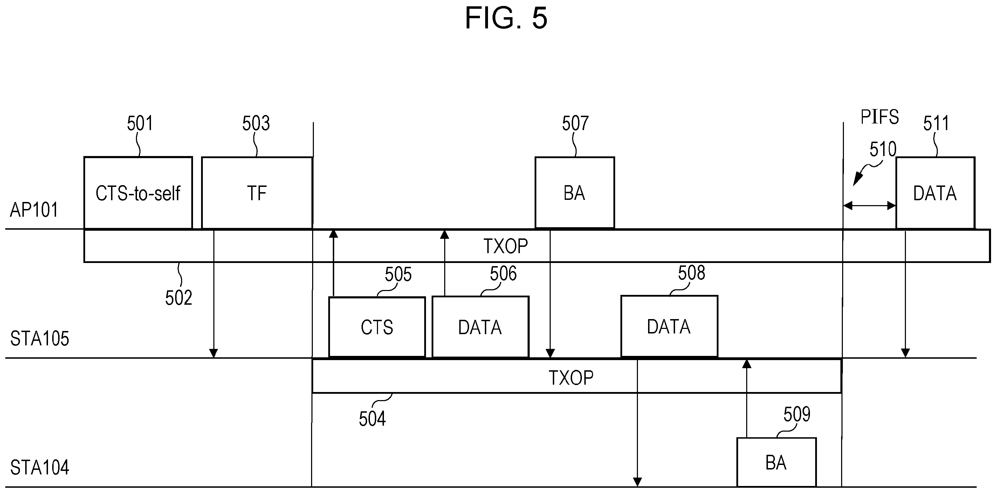

Next, an example of a TXOP sharing mechanism according to the present embodiment will be described. In Fig. 5, a TXOP acquired by the communication apparatus 101 is allocated to the communication apparatus 105 by TXOP sharing, whereby the TXOP acquired by the communication apparatus 101 is shared with the communication apparatus 105. This allows the communication apparatus 105 to transmit a wireless frame for the duration of the allocated TXOP.

First, the communication apparatus 101 acquires a TXOP based on the channel access described above, and transmits a CTS-to-self frame (501). The Duration field of this frame stores information regarding a TXOP duration (502) to be secured by the communication apparatus 101. Accordingly, upon receiving this frame, the communication apparatus 105 sets therein a NAV corresponding to the TXOP duration.

Next, the communication apparatus 101 determines to allocate a portion or the whole of the TXOP acquired by the communication apparatus 101 to another communication apparatus, and transmits a Trigger frame (TF) (503). In the present embodiment, the communication apparatus 101 determines to allocate a portion of the TXOP acquired by the communication apparatus 101 to the communication apparatus 105, and transmits a TF including information regarding the allocation. For example, the communication apparatus 101 transmits an MU-RTS TXS Trigger frame as the Trigger frame. The communication apparatus 101 stores, in the MU-RTS TXS Trigger frame, information indicating the TXOP duration to be allocated to the communication apparatus 105. Thus, the communication apparatus 105 determines the TXOP duration (504) allocated from the communication apparatus 101. In this instance, the communication apparatus 101 may store information indicating the TXOP duration in the Allocation Duration subfield of the MU-RTS TXS Trigger frame. Further, the communication apparatus 101 stores "1" or "2" in the Triggerd TXOP Sharing Mode subfield. Storing "1" in the subfield indicates that the destination of data transmission within the TXOP is limited to the communication apparatus 101. Storing "2" in the subfield indicates that the destination of data transmission within the TXOP is not limited. The MU-RTS TXS Trigger frame is an abbreviation for Multi User-Request To Send TXOP Sharing Trigger frame.

Next, the communication apparatus 105 transmits a CTS frame (505) as a response to the TF 503. The communication apparatus 105 stores, in the Duration field of the CTS frame, information indicating the TXOP duration 504 allocated from the communication apparatus 101, thereby causing communication apparatuses surrounding the communication apparatus 105 to set their NAVs.

Thereafter, the communication apparatus 105 starts data communication with another communication apparatus (506 to 509). First, after transmitting the CTS frame 505, the communication apparatus 105 transmits data (506) after a SIFS duration. After receiving the data 506, the communication apparatus 101 transmits a Block Ack frame (507) as an acknowledgment response to the reception of the data 506 after the SIFS duration. After receiving the Block Ack frame 507, the communication apparatus 105 transmits data (508) after the SIFS duration, because the allocated TXOP 504 remains and the communication apparatus 105 has data to be transmitted. The communication apparatus 104 transmits a Block Ack frame 509 in a manner similar to the transmission of the Block Ack frame 507 from the communication apparatus 101. SIFS is an abbreviation for Short Inter Frame Space.

After the TXOP duration allocated to the communication apparatus 105 has elapsed, the communication apparatus 101 performs carrier sense for a PIFS duration (510), which is longer than the SIFS duration. In response to determining that the channel is idle through the carrier sense, the communication apparatus 101 transmits data (511).

Thus, in conventional TXOP sharing, it is also assumed that communication between other communication apparatuses different from the communication apparatus that has allocated the TXOP may occur during the allocated TXOP duration. In such a case, the communication apparatus 101 resumes data transmission after performing carrier sense for the PIFS duration after the allocated TXOP duration has elapsed. For example, it is also assumed that, due to the communication apparatus 105 running out of data to be transmitted, a predetermined remaining period occurs from the Block Ack frame 509 until the allocated TXOP duration 504 elapses. In such a case, communication apparatuses surrounding the communication apparatus 105 are restricted from performing communication during the remaining period, even though the channel is idle.

To address this, in a case where the remaining period occurs, it is considered that the communication apparatus 105 transmits a CF-End frame to notify surrounding communication apparatuses of termination of the allocated TXOP duration 504. At this time, however, the TXOP duration acquired by the communication apparatus 101 via the CTS frame 501 remains. The communication apparatuses surrounding the communication apparatus 105 reset the NAVs in response to the CF-End frame. This may cause a collision in transmission of wireless frames between the communication apparatus 101 and the surrounding communication apparatuses that have reset the NAVs, depending on the waiting times of the surrounding communication apparatuses after receiving the CF-End frame. Accordingly, the present invention proposes a control method to be performed after the communication apparatus 101, which allocates a TXOP, receives a CF-End frame.

### (TXOP Sharing according to Present Embodiment)

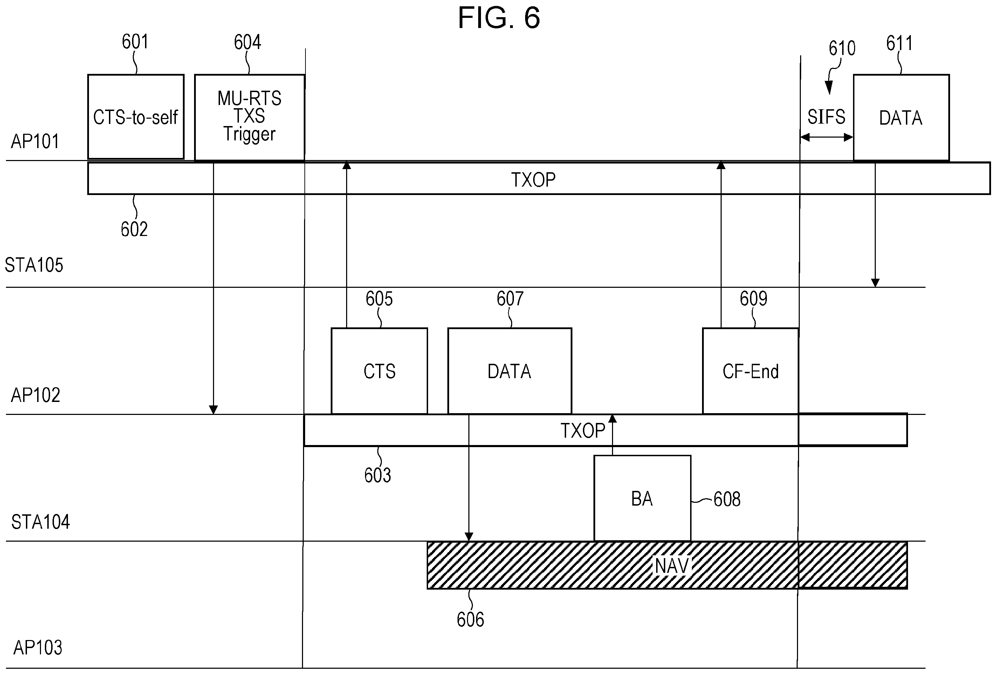

Fig. 6 illustrates an example of an operation sequence according to the present embodiment in TXOP sharing. In the present sequence, the AP 101 acquires a transmission opportunity (TXOP), and performs TXOP sharing for allocating a portion or the whole of the acquired TXOP to the AP 102. Next, the AP 102 terminates and returns the remainder of the allocated TXOP duration to the AP 101. After receiving a wireless frame indicating termination of the TXOP, the AP 101 adjusts the transmission waiting time so as to be able to communicate before other communication apparatuses, and then transmits a wireless frame. In the present embodiment, the AP 101 sets a SIFS as the waiting time. The SIFS is the IFS having the shortest duration among the IFSs. This allows the AP 101 to transmit a wireless frame before other communication apparatuses start transmission of wireless frames. Thus, the other communication apparatuses determine that the channel is busy based on the wireless frame from the AP 101 and refrain from transmitting wireless frames. This can reduce collisions between wireless frames transmitted from the AP 101 and the other communication apparatuses.

First, the AP 101 transmits a CTS-to-self frame 601 to secure a TXOP duration 602. The AP 101 determines to allocate a TXOP duration 603 within the TXOP duration 602 to the AP 102. The AP 101 allocates the TXOP duration 603 within the TXOP duration 602 to the AP 102 by using an MU-RTS TXS Trigger frame 604. That is, the AP 101 transmits the MU-RTS TXS Trigger frame 604, whose Allocation Duration subfield stores information indicating the TXOP duration 603, to the AP 102. The AP 102 receives the MU-RTS TXS Trigger frame 604, and recognizes that the TXOP 603 has been allocated to the AP 102. The AP 101 may secure the TXOP duration 602 and allocate the TXOP duration 603 by using only the MU-RTS TXS Trigger frame 604 without transmitting the CTS-to-self frame 601.

Next, the AP 102 transmits a CTS frame 605 as a response to the MU-RTS TXS Trigger frame 604. The AP 102 stores information indicating the TXOP duration 603 in the Duration field, thereby causing other surrounding communication apparatuses to set their NAVs for a period corresponding to the TXOP duration 603. For example, the STA 104 receives the CTS frame 605 transmitted from the AP 102, thereby recognizing that the AP 102 has secured the TXOP duration 603 and setting a NAV 606. Thus, the interactions up to the exchange of the CTS frame 605 in the present sequence allow the surrounding communication apparatuses to recognize the TXOP durations secured by the AP 101 and the AP 102 as NAV durations, thereby controlling the surrounding communication apparatuses to refrain from generating unnecessary radio waves during the NAV durations.

Subsequently, the AP 102 transmits data 607 to the STA 104 in the TXOP duration 603. The AP 102 can prompt another STA to transmit data by transmitting a Trigger frame instead of transmitting the data 607. The data 607 may be transmitted to a plurality of communication apparatuses. The AP 102 may transmit the data 607 to the STA 104 with directivity (via a directional transmission). For example, the AP 102 controls the directivity of the data 607 using beamforming. Controlling the directivity in this manner provides improvements in the communication speed and the communication error rate, thereby stabilizing communication.

Next, the STA 104 transmits a Block Ack (BA) frame 608 to the AP 102, indicating that the data from the AP 102 has been received.

Upon receiving the BA frame, the AP 102 confirms that communication with the STA 104 has completed within the TXOP duration allocated by the AP 101, and transmits a CF-End frame 609 to the AP 101, indicating the termination and return of the remainder of the TXOP duration 603. The AP 101 receives the CF-End frame 609 in the TXOP duration 603, thereby recognizing that the AP 102 has truncated the remainder of the TXOP duration 603. The STA 104, which has set the NAV corresponding to the TXOP duration 603, resets the NAV 606 in response to receiving the CF-End frame 609. Then, after confirming that the channel is idle, the STA 104 resumes the channel access procedure. Thus, by resetting the NAV of a surrounding communication apparatus (the STA 104) in conjunction with the return of the TXOP, it is possible to prevent an unintended NAV from remaining set in the communication apparatus (the STA 104) outside the communication range of a communication apparatus (the AP 101) securing the TXOP.

The CF-End frame is an abbreviation for a Contention Free-End frame. The CF-End frame is a type of control frame, and is a frame with the Type field of the MAC frame set to 01 and the Subtype field set to 1110. The CF-End frame is a frame that can be transmitted by a communication apparatus holding a TXOP. By transmitting the CF-End frame, the communication apparatus can notify other communication apparatuses of the termination of the TXOP held by the communication apparatus. A communication apparatus that has received the CF-End frame resets the NAV set therein, thereby becoming able to resume the channel access procedure. In the present embodiment, the AP 102 uses the CF-End frame to provide notification of the termination of the remainder of the TXOP duration 603; however, the frame used for the notification is not limited thereto. For example, a frame for providing notification of the termination of the remainder of the TXOP duration 603 is only required to be a predetermined control frame. In the present embodiment, the predetermined control frame is a MAC frame with the Type field set to 01 and the Subtype field set to 1110. Further, the predetermined control frame can provide notification of the termination of the remainder of the TXOP duration. The predetermined control frame can also trigger other surrounding communication apparatuses to reset their NAVs. The control frame transmitted in this case does not need to be the CF-End frame. For example, a frame with the Type field set to 01 and the Subtype field set to 1111 may be used. This frame may be defined as a frame for a Shared AP to return a shared TXOP to a Sharing AP.

Upon receiving the CF-End frame 609 transmitted from the AP 102, the AP 101 waits for a SIFS time 610 to elapse from the completion of the reception of the CF-End frame 609. When the SIFS time 610 elapses, the AP 101 transmits a data frame 611 to the STA 105.

Thus, the AP 101 starts transmitting a wireless frame after a SIFS duration shorter than the waiting time of other communication apparatuses has elapsed, thereby becoming able to transmit data before any other communication apparatus newly acquires a TXOP. Accordingly, the other communication apparatuses determine that the channel is busy based on the data frame of 606, and thus determine that the other communication apparatuses have not yet obtained a transmission opportunity. This can avoid collision between transmission of wireless frames from the AP 101 and transmission of wireless frames from the other communication apparatuses.

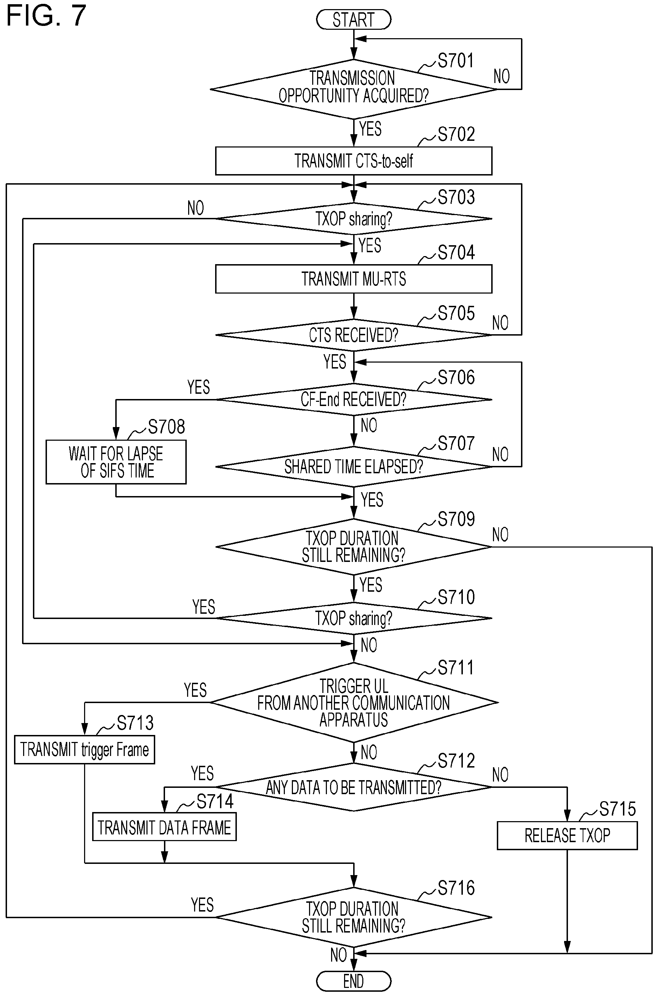

Fig. 7 illustrates an example of a flowchart depicting an operation of the AP 101 for performing TXOP sharing. The present operation flow is implemented by the control unit 202 of the AP 101 reading and executing a computer program stored in the storage unit 201, in accordance with an instruction for connection, communication, or the like with a communication counterpart. Although the following describes an operation of the AP 101, the APs 102 and 103 can also operate in a similar manner. At a start point of the present flowchart, the APs 101 to 103 are assumed to have already formed a Multi-AP group for coordinated operation.

First, the control unit 202 of the AP 101 attempts to acquire a TXOP (transmission opportunity) (S701) by checking whether a channel is idle during a waiting time randomly determined for collision avoidance. If it is confirmed that the channel is idle during the waiting time for collision avoidance, the control unit 202 determines that the AP 101 has successfully acquired a transmission opportunity. If the control unit 202 determines that the AP 101 has successfully acquired a transmission opportunity, the process proceeds to S702. On the other hand, if the operating channel is busy or if another communication apparatus acquires a transmission opportunity and starts data transmission during the waiting time of the AP 101 and the operating channel becomes busy, the control unit 202 determines that a transmission opportunity has not been successfully acquired. If the control unit 202 determines that a transmission opportunity has not been successfully acquired, the control unit 202 waits for the channel to become idle again and then re-attempts to acquire a transmission opportunity. In a case where the AP 101 has successfully acquired a transmission opportunity, the AP 101 transmits the CTS-to-self frame 601 to secure the acquired TXOP duration 602. Another communication apparatus that has received the CTS-to-self frame 601 sets a NAV corresponding to the TXOP duration 602.

Subsequently, the control unit 202 determines whether to allocate a portion of the TXOP duration acquired by the AP 101 to another AP (S703). In this step, the AP 101 makes the determination based on, for example, information obtained in advance. The information obtained in advance is, for example, information indicating that another AP has a large amount of data to be communicated with an STA connected thereto, and, in this case, in S703, the AP 101 determines to allocate a portion of the TXOP to another AP. Alternatively, the information obtained in advance is information indicating that low-latency information is periodically communicated between another AP and an STA connected to the other AP, and, in this case, in S703, the AP 101 determines to allocate a portion of the TXOP to the other AP. If the control unit 202 determines, based on the acquired transmission opportunity, to allocate a portion of the obtained duration of the transmission opportunity to another AP, the process proceeds to S704. If the control unit 202 determines not to allocate a portion of the obtained duration of the transmission opportunity to another AP, the process proceeds to S711.

In S704, the control unit 202 transmits an MU-RTS TXS Trigger frame to perform TXOP sharing for allocating a portion of the obtained duration of the transmission opportunity secured by the AP 101 to another AP. In the present embodiment, the AP 101 transmits an MU-RTS TXS Trigger to the AP 102 to perform TXOP sharing to the AP 102. In the transmission of the MU-RTS TXS Trigger frame, the communication unit 206 controls the antenna 207 to transmit the signal to the outside omnidirectionally. To maintain the secured duration longer than the duration allocated by the MU-RTS TXS Trigger frame, the communication unit 206 controls the antenna 207 to transmit a CTS-to-self frame. The CTS-to-self frame specifies the duration of the transmission opportunity obtained by the AP 101, and the AP 101 transmits an MU-RTS TXS Trigger frame to allocate a portion of that duration to the AP 102. For the frame transmission operation, the functional units 301 to 304 operate in coordination to perform frame transmission. In the present embodiment, the AP 101 securing the TXOP duration 602 allocates the TXOP duration 603 to the AP 102 by using an MU-RTS TXS Trigger frame.

Subsequently, the wireless communication control unit 303 waits for the reception of a CTS frame in response to the transmitted MU-RTS TXS Trigger frame (S705). Reception is confirmed by determining whether the frame received (sensed) by the wireless communication control unit 303 is a CTS frame, based on a result of the analysis of the frame performed by the frame analysis unit 302. If the AP 102 receives the MU-RTS TXS Trigger frame, the AP 102 transmits a CTS frame after the SIFS time has elapsed from the transmission of the MU-RTS TXS Trigger frame. If the CTS frame fails to be received within a certain period, the process returns to S702. If the CTS frame is received, the process proceeds to S706. The TXOP duration specified in the CTS frame corresponds to the duration allocated to the AP 102 by the MU-RTS TXS Trigger frame transmitted from the AP 101.

In a case where the AP 101 receives the CTS frame, this indicates that the AP 102 recognizes TXOP sharing and starts communication within the allocated TXOP duration. The control unit 202 checks, via the frame analysis unit 302, whether a CF-End frame indicating the early return of the allocated duration is received from the AP 102 (S706). In a case where the CF-End frame is not received, the process proceeds to S707. In a case where the CF-End frame is received, the process proceeds to S708. In a case where the CF-End frame is not received, the control unit 202 checks whether the allocated duration has elapsed (S707). S706 and S707 are repeated until the allocated duration elapses. In a case where the allocated duration has elapsed, the process proceeds to S709. Also in S708, the AP 101 waits for a predetermined period after the reception of the CF-End frame (S708). In the present embodiment, the AP 101 waits until the SIFS time, which serves as the predetermined period, elapses. The waiting time is only required to be shorter than the time from the reception of the CF-End frame until it is determined that all other communication apparatuses have obtained a transmission opportunity. For example, a PIFS (PCF (Point Coordination Function) Inter Frame Space) time may be used.

In S708, the control unit 202 uses the TXOP sharing control unit 304 to check whether the TXOP duration secured by transmitting the CTS-To-self frame in S702 remains. In a case where the duration remains, the process proceeds to S710. In a case where the duration does not remain, it is determined that the TXOP duration acquired by the AP 101 has expired, and the present flow ends.

In S704, a portion of the TXOP duration may be allocated to an STA connected to the AP 101. In that case, in S706, the AP 101 also waits to determine whether a frame is received that includes a CAS Control subfield of an HT Control field, where the value of an RDG/More PPDU subfield of the field is set to 0. This allows the STA allocated the TXOP to return the TXOP by using a frame in which the value of the RDG/More PPDU subfield is set to 0 or by using a CF-End frame. For example, the STA allocated the TXOP can use a frame with the value of the RDG/More PPDU subfield set to 0 to return the TXOP in conjunction with transmission of data. In contrast, the STA can use a CF-End frame to return the TXOP in conjunction with resetting the NAVs of other surrounding communication apparatuses. Thus, by selectively using the above-described two frames, the STA allocated the TXOP can more efficiently perform the TXOP return process.

In a case where the TXOP duration acquired by the AP 101 remains, the control unit 202 again determines whether to allocate a portion of the duration to another AP or an STA (S710). In a case where allocation is to be made again, the process returns to S704. In a case where allocation is not to be made, the process proceeds to S711.

In S711 and S712, the AP 101 determines, for example, whether to transmit a Trigger frame or a data frame in accordance with predetermined conditions. The determination based on each condition is a determination for deciding an operation to be executed by the AP 101 after the SIFS time has elapsed from the reception of the CF-End frame in the present embodiment. The content of the determination based on each condition after the lapse of the SIFS time in the present embodiment is not limited thereto. The order of making the determination based on each condition is not limited to that described above. Similarly, the timing for making the determination based on each condition to decide the operation after the SIFS time has elapsed is not limited to that described above. For example, the determination based on each condition to decide the operation may be performed in parallel with the waiting for the SIFS duration (S708) serving as the predetermined period described above. The determination based on each condition to decide the operation may be performed at the timing of receiving each data item or at each predetermined cycle, thereby making the determination in advance. In this manner, the AP 101 performs the determination based on each condition to decide the operation, and determines the wireless frame to be transmitted.

In S711, the control unit 202 cooperates with the communication unit 206 and the communication control unit 303 to determine whether to prompt another communication apparatus to transmit data and to perform data communication as the data receiving side (S711). If it is determined to prompt another communication apparatus to transmit data, the AP 101 transmits a Trgger frame (S712). In this case, for example, the AP 101 transmits a Trigger frame to the STA 105, thereby prompting the STA 105 to transmit uplink data. In the transmission of the Trigger frame, the communication unit 206 controls the antenna 207 to transmit the signal to the outside omnidirectionally. In a case where the STA 105 is prompted to transmit data, after receiving a data frame from the STA 105, the AP 101 transmits a Block Ack (BA) frame to the STA 105 for reception acknowledgment. Upon completion of the data reception procedure, the process proceeds to S716.

In S712, the control unit 202 cooperates with the communication unit 206 and the communication control unit 303 to determine whether to transmit data to another communication apparatus (S712). In the transmission of the data frame, the communication unit 206 controls the antenna 207 to transmit the signal to the outside omnidirectionally. Thereafter, a BA frame for reception acknowledgment is received. Upon completion of the data transmission procedure, the process proceeds to S716.

In S715, the control unit 202 terminates and releases the TXOP duration secured in S702. S715 is an operation executed in response to a determination by the AP 101 to release the remaining TXOP duration. In the present embodiment, the AP 101 executes this processing based on a determination of "No" in S711 and S712; however, the processing is not limited thereto. For example, the determination as to whether to release the TXOP duration may be performed prior to the determinations in S711 and S712.

In the present embodiment, in S715, the AP 101 performs control to transmit a CF-End frame or not to transmit any wireless frame. Based on a determination in S715 that it is necessary to reset the NAVs of surrounding apparatuses, the AP 101 performs control to transmit a CF-End frame. By transmitting the CF-End frame, the AP 101 can reset unintended NAVs set in surrounding communication apparatuses. Based on a determination in S715 that it is not necessary to reset the NAVs of surrounding apparatuses, the AP 101 performs control not to transmit any wireless frame. Since no surrounding communication apparatus has set an unintended NAV, the TXOP duration can be released to other surrounding communication apparatuses without the transmission of any unnecessary wireless frame. In the present embodiment, an example has been described in which the AP 101 transmits a CF-End frame in S715; however, the present invention is not limited thereto. For example, a frame may be transmitted in which the value of the RDG/More PPDU subfield within the CAS Control subfield of the HT Control field is set to 0.

In S716, the control unit 202 uses the TXOP sharing control unit 304 to check whether the TXOP duration secured by transmitting the CTS-to-self frame in S702 remains. In a case where the duration remains, the process returns to S703. In a case where the duration does not remain, the process ends.

### (Other Embodiments)

A recording medium storing program code of software for implementing the functions described above may be supplied to a system or an apparatus, and a computer (CPU or MPU) of the system or the apparatus may read and execute the program code stored in the recording medium. In this case, the program code read from the storage medium implements the functions of the embodiment described above, and the storage medium storing the program code constitutes the apparatus described above.

Examples of the storage medium for supplying the program code may include a flexible disk, a hard disk, an optical disk, a magneto-optical disk, a CD-ROM, a CD-R, a magnetic tape, a non-volatile memory card, a ROM, and a DVD.

Furthermore, the functions described above are implemented by executing the program code read by the computer. In addition, an OS operating on the computer may perform part or all of the actual processing based on the instructions of the program code to implement the functions described above. OS is an abbreviation for Operating System.

Furthermore, the program code read from the storage medium is written into a memory provided in a function expansion board inserted into the computer or a function expansion unit connected to the computer. Based on the instructions of the program code, a CPU provided in the function expansion board or the function expansion unit may perform part or all of the actual processing to implement the functions described above.

The present invention may also be implemented by processing in which a program for implementing one or more functions of the embodiment described above is supplied to a system or an apparatus via a network or a storage medium, and one or more processors in a computer of the system or the apparatus read and execute the program. Further, the present invention may be implemented by circuitry (e.g., an ASIC) that implements one or more functions.

The disclosure of the embodiment described above includes the following configurations.

### (Configuration 1)

A communication apparatus including:
acquisition means for acquiring a Transmission Opportunity (TXOP) for transmitting a wireless frame;
securing means for securing a first TXOP duration by using a first wireless frame;
sharing means for allocating a second TXOP duration within the first TXOP duration to another communication apparatus by using a Trigger frame;
reception means for receiving, during the second TXOP duration, a predetermined control frame indicating termination of the second TXOP duration; and
control means for, in a case where the predetermined control frame is received during the second TXOP duration, performing control to transmit a second wireless frame after a duration of a predetermined Inter Frame Space (IFS) elapses from a reception of the predetermined control frame, wherein
the control means performs control to transmit the second wireless frame based on a predetermined condition.

### (Configuration 2)

The communication apparatus according to configuration 1, wherein
the predetermined control frame is a Contention Free-End (CF-End) frame.

### (Configuration 3)

The communication apparatus according to configuration 1 or configuration 2, wherein
the predetermined IFS is a Short IFS.

### (Configuration 4)

The communication apparatus according to configuration 1 or configuration 2, wherein
the predetermined IFS is a Point Coordination Function IFS.

### (Configuration 5)

The communication apparatus according to any one of configurations 1 to 4, wherein
the Trigger frame is a Multi User-Request To Send TXOP Sharing Trigger (MU-RTS TXS Trigger) frame.

### (Configuration 6)

The communication apparatus according to any one of configurations 1 to 5, wherein
the communication apparatus and the other communication apparatus are APs, and
the communication apparatus further includes configuration means for configuring a wireless network.

### (Configuration 7)

The communication apparatus according to any one of configurations 1 to 6, wherein
the second wireless frame is the Trigger frame, and
the control means performs control to transmit the Trigger frame based on a determination that a third TXOP duration within the first TXOP duration is to be allocated to a further communication apparatus different from the other communication apparatus.

### (Configuration 8)

The communication apparatus according to any one of configurations 1 to 6, wherein
the second wireless frame is a data frame, and
the control means performs control to transmit the data frame based on a determination that data is to be transmitted to a communication apparatus participating in the wireless network.

### (Configuration 9)

The communication apparatus according to any one of configurations 1 to 6, wherein
the second wireless frame is the Trigger frame, and
the control means performs control to transmit the Trigger frame based on a determination that a communication apparatus participating in the wireless network is to be prompted to transmit a data frame.

### (Configuration 10)

The communication apparatus according to any one of configurations 1 to 6, wherein
the second wireless frame is the predetermined control frame, and
the control means performs control to transmit the predetermined control frame based on a determination that the first TXOP duration is to be terminated.

### (Configuration 11)

The communication apparatus according to any one of configurations 1 to 10, wherein
in a case where the control means determines to terminate the first TXOP duration after reception of the predetermined control frame, the control means performs control not to transmit the second wireless frame after the duration of the predetermined IFS elapses from the reception of the predetermined control frame during the second TXOP duration.

### (Configuration 12)

The communication apparatus according to any one of configurations 1 to 11, wherein
the first wireless frame used by the securing means and the Trigger frame used by the sharing means are the same frame.

The present invention is not limited to the embodiment described above, and may be changed and modified in various ways without departing from the spirit and scope of the present invention. Accordingly, to apprise the public of the scope of the present invention, the following claims are made.

This application is based upon and claims the benefit of priority from Japanese Patent Application No. 2023-201135 filed November 28, 2023, the disclosure of which is incorporated herein in its entirety by reference.

### Reference Signs List

- 201: storage unit
- 202: control unit
- 203: functional unit
- 204: input unit
- 205: output unit
- 206: communication unit

## Claims

1. A communication apparatus comprising:
acquisition means for acquiring a Transmission Opportunity (TXOP) for transmitting a wireless frame;
securing means for securing a first TXOP duration by using a first wireless frame;
sharing means for allocating a second TXOP duration within the first TXOP duration to another communication apparatus by using a Trigger frame;
reception means for receiving, during the second TXOP duration, a predetermined control frame indicating termination of the second TXOP duration; and
control means for, in a case where the predetermined control frame is received during the second TXOP duration, performing control to transmit a second wireless frame after a duration of a predetermined Inter Frame Space (IFS) elapses from a reception of the predetermined control frame, wherein
the control means performs control to transmit the second wireless frame based on a predetermined condition.

2. The communication apparatus according to claim 1, wherein
the predetermined control frame is a Contention Free-End (CF-End) frame.

3. The communication apparatus according to claim 1, wherein
the predetermined IFS is a Short IFS.

4. The communication apparatus according to claim 1, wherein
the predetermined IFS is a Point Coordination Function IFS.

5. The communication apparatus according to claim 1, wherein
the Trigger frame is a Multi User-Request To Send TXOP Sharing Trigger (MU-RTS TXS Trigger) frame.

6. The communication apparatus according to any one of claims 1 to 4, wherein
the communication apparatus and the other communication apparatus are APs, and
the communication apparatus further comprises configuration means for configuring a wireless network.

7. The communication apparatus according to claim 6, wherein
the second wireless frame is the Trigger frame, and
the control means performs control to transmit the Trigger frame based on a determination that a third TXOP duration within the first TXOP duration is to be allocated to a further communication apparatus different from the other communication apparatus.

8. The communication apparatus according to claim 6, wherein
the second wireless frame is a data frame, and
the control means performs control to transmit the data frame based on a determination that data is to be transmitted to a communication apparatus participating in the wireless network.

9. The communication apparatus according to claim 6, wherein
the second wireless frame is the Trigger frame, and
the control means performs control to transmit the Trigger frame based on a determination that a communication apparatus participating in the wireless network is to be prompted to transmit a data frame.

10. The communication apparatus according to claim 6, wherein
the second wireless frame is the predetermined control frame, and
the control means performs control to transmit the predetermined control frame based on a determination that the first TXOP duration is to be terminated.

11. The communication apparatus according to claim 6, wherein
in a case where the control means determines to terminate the first TXOP duration after reception of the predetermined control frame, the control means performs control not to transmit the second wireless frame after the duration of the predetermined IFS elapses from the reception of the predetermined control frame during the second TXOP duration.

12. The communication apparatus according to claim 1, wherein
the first wireless frame used by the securing means and the Trigger frame used by the sharing means are the same frame.

13. A control method for a communication apparatus, the control method comprising:
an acquisition step of acquiring a Transmission Opportunity (TXOP) for transmitting a wireless frame;
a securing step of securing a first TXOP duration by using a first wireless frame;
a sharing step of allocating a second TXOP duration within the first TXOP duration to another communication apparatus by using a Trigger frame;
a reception step of receiving, during the second TXOP duration, a predetermined control frame indicating termination of the second TXOP duration; and
a control step of, in a case where the predetermined control frame is received during the second TXOP duration, performing control to transmit a second wireless frame after a duration of a predetermined Inter Frame Space (IFS) elapses from a reception of the predetermined control frame, wherein
the control step performs control to transmit the second wireless frame based on a predetermined condition.

14. A program for causing a computer to function as the control method for a communication apparatus according to claim 13.
